(19) Europäisches Patentamt
European Patent Office
Office européen des brevets

(11) **EP 0 960 858 A2**

(12) **EUROPÄISCHE PATENTANMELDUNG**

(43) Veröffentlichungstag:
01.12.1999 Patentblatt 1999/48

(51) Int. Cl.⁶: **C02F 1/52**

(21) Anmeldenummer: 99110280.7

(22) Anmeldetag: 27.05.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.05.1998 DE 19824076**

(71) Anmelder: **Domo Caproleuna GmbH**
**06234 Leuna (DE)**

(72) Erfinder:
• **Scharmann, Ingetraud Dipl.Chem.**
**06132 Halle (DE)**
• **Mädebach, Annerose HS-Ing.**
**06132 Halle (DE)**
• **Seidler, Joachim Dipl.-Chem.**
**06124 Halle (DE)**
• **Neubauer, Hans-Dieter Dr.**
**06217 Merseburg (DE)**

(74) Vertreter:
**Schinke, Herbert, Dr. Dr.,**
**Patentanwaltskanzlei**
**Postfach 11 11**
**06234 Leuna (DE)**

(54) **Verfahren zur Reinigung peroxidhaltiger Wässer**

(57) Die Erfindung betrifft ein Verfahren zur Reinigung peroxidhaltiger Wässer, insbesondere von Wässern mit einem Gehalt an primär organischen Peroxiden.

Es wurde gefunden, daß die Reinigung erreicht wird, wenn die Wässer bei Temperaturen von 40 ° bis 80 °C und - ggfs. durch Zugabe von Alkalilauge - einem $P_H$-Wert von 8 bis 10 mit Oxiden oder Oxidgemischen von Elementen der VII. und/oder VIII. Nebengruppe des Periodensystems in Kontakt gebracht werden.

Als Oxide und Oxidgemische werden vorzugsweise Oxide oder Oxidgemische von Mangan und/oder Eisen eingesetzt.

Zweckmäßig sind die Oxide oder Oxidgemische der Elemente der Nebengruppen auf inerten Trägermaterialien fixiert.

Nach der Reinigung kann die Flüssigphase deshalb herkömmlichen biologischen Abwasserreinigungsverfahren zugeführt werden.

EP 0 960 858 A2

**Beschreibung**

Die Erfindung betrifft ein Verfahren zur Reinigung peroxidhaltiger Wässer, insbesondere von Wässern mit einem Gehalt an primär organischen Peroxiden.

Damit soll vor allem erreicht werden, daß die Flüssigphase herkömmlichen biologischen Abwasserreinigungsverfahren zugeführt werden kann.

Die bekannte desinfizierende Wirkung von Peroxiden auf biologische Abwassersysteme verursacht auch bei sehr großen Verdünnungen mit unbelasteten Verbrauchswässern stets Schäden in biologischen Abbauprozessen, wie Nitrifizierungsund Denitrifizierungsprozessen.

Ein wichtiges Anwendungsgebiet besteht bei der Cumol-/Phenolsynthese. Obwohl die Wertstoffverwertung der Cumol-/Phenolsynthese weitgehend optimiert ist, entstehen uner-wünschte peroxidhaltige Wässer mit organischen Peroxiden, wobei der Peroxidgehalt üblicherweise als Methylhydroperoxid (MHP) erfaßt wird.

Bekanntlich lassen sich Peroxidverbindungen durch Reduktionsmittel zerstören und damit unwirksam machen. Hierbei sind beträchtliche Mengen, z. B. von $Fe(II)SO_4$, $Na_2SO_3$ oder Na HS, erforderlich

Diese Verfahren führen zu hohen Kosten und zur erheblichen Belastung der Abwässer.

Weiterhin sollen organische Peroxide nach dem SU-Patent Nr. 98 1247 dadurch zerstört werden, daß die diese enthaltenden Abwässer im $p_H$-Wert-Bereich 10 - 11 mit Kupferspänen gekocht werden.

Dieses Verfahren hat den Nachteil relativ hoher Kosten für die Aufheizung des Abwassers und die benötigte Natronlauge. Außerdem ist nur eine geringe Abbaurate nachweisbar.

Aufgabe der vorliegenden Erfindung ist es daher, peroxidhaltige Abwässer mit einem Gehalt von 0,1 bis 40 g/l organisches Peroxid, z. B. aus der Cumol-/Phenolsynthese, für die herkömmliche biologische Abwasserreinigung vorzubereiten, da Peroxide biologisch schwer abbaubar sind.

Es wurde gefunden, daß dies erreicht wird, wenn die Wässer bei Temperaturen von 40 ° bis 80 °C und - ggfs. durch Zugabe von Alkalilauge - einem $p_H$-Wert von 8 bis 10 mit Oxiden oder Oxidgemischen von Elementen der VII. und/oder VIII. Nebengruppe des Periodensystems in Kontakt gebracht werden.

Als peroxidhaltige Wässer können Prozeßwässer und Abwässer, die neben den Gehalten an organischen Peroxiden in gelöster Form auch andere Organika wie Kohlenwasserstoffe, Alkohole, Carbonylverbindungen und Carbonsäuren sowie Salze in beliebiger Konzentration enthalten können, eingesetzt werden. Als Peroxide können Methylhydroperoxid, Cumolhydroperoxid, Hydroperoxide anderer Organika enthalten sein.

Während der Reaktion werden primär entweder $H_2$ und Ameisensäure oder vorzugsweise Methanol und $O_2$ gebildet, wobei das Methanol in bekannter Weise als biologischer Futterstoff gilt und Ameisensäure biologisch ebenfalls abbaubar ist.

$$CH_3OOH \rightarrow HCOOH + H_2 \tag{1}$$

$$CH_3OOH \rightarrow CH_3OH + \tfrac{1}{2} O_2 \tag{2}$$

Es wurde weiterhin gefunden, daß die Verhältnisse der Reaktionen (1) und (2) in bestimmten $p_H$-Bereichen > 7 stark differenziert stattfinden. Neben der Vorzugsreaktion (2) deren Maximum um den $p_H$-Bereich 8,5 abläuft, steigt der Anteil an Reaktion (1) im $p_H$-Bereich > 10.

Den gewünschten $p_H$-Wert erreicht man durch entsprechende Dosierung von Alkalilauge und deren Vermischung.

Eine Vorzugsvariante des Verfahrens besteht darin, daß die Behandlung der Wässer bei Temperaturen um 50 °C und $p_H$-Werten um 8,5 vorgenommen wird.

Als Oxide und Oxidgemische werden vorzugsweise Oxide oder Oxidgemische von Mangan und/oder Eisen eingesetzt.

Zweckmäßig sind die Oxide oder Oxidgemische der Elemente der Nebengruppen auf inerten Trägermaterialien fixiert. Die Trägermaterialien bestehen aus Oxiden oder Oxidgemischen von Elementen der II. bis IV. Nebengruppe des Periodensystems, vorzugsweise $Al_2O_3$, $SiO_2$, CaO und/oder MgO.

Eine sehr wirtschaftliche Durchführung des Verfahrens besteht darin, daß die bei dem Verfahren entstehenden Gase Wasserstoff und Sauerstoff zur kalorischen Verwertung genutzt werden.

In einer bevorzugten Ausgestaltung des erfindungsgemäßen Verfahrens wird ein Methylhydroperoxid und Cumolhydroperoxid enthaltendes Abwasser mit einem Gesamtgehalt an organischem Peroxid von 1 %, gerechnet als Methyldhydroperoxid, bei einer Temperatur von 50 °C, einer Verweilzeit von 6 min, einem $p_H$-Wert von 8,5 an einem Braunsteinkontakt (Zylinder $\varnothing$ 2,5 mm, L = 10 mm) auf $Al_2O_3$-Träger behandelt.

Hierbei entsteht ein Abgas mit 92 % $O_2$ und 7 % $H_2$. Der Peroxidgehalt des Abwassers liegt nach der Behandlung unterhalb der Nachweisgrenze der angewandten Prüfmethoden. Das Abwasser ist im Rahmen der üblichen Verfahrensweise ohne Schwierigkeiten biologisch abbaubar.

2

Durch das erfindungsgemäße Verfahren und die Freisetzung der Abgase und leicht flüchtigen Organika durch Strippung tritt eine Erniedrigung des chemischen Sauerstoffbedarfs für die biologische Abwasserbehandlung ein.

Nach der Reinigung kann die Flüssigphase deshalb herkömmlichen biologischen Abwasserreinigungsverfahren zugeführt werden.

Beispiel 1

Aus einem Vorratsbehälter werden kontinuierlich stündlich 250 l 25 °C warmes, 10 g/l organische Peroxide, gerechnet als Methylhydroperoxid, enthaltendes Prozeßabwasser mit einem $p_H$-Wert von 2,5 per Rohrleitung abgezogen und zur Einstellung eines $p_H$-Wertes von 8,5 wäßrige Natronlauge mit einem NaOH-Gehalt von 15 Ma.-% zudosiert. Das so alkalisierte Abwasser wird zwecks Aufheizung auf 50 °C durch einen mit Heizdampf beaufschlagten Wärmeaustauscher geleitet und nachfolgend in die Anlage zum katalytischen Peroxidabbau eingespeist. Diese besteht aus 4 horizontal hintereinander angeordneten zylindrischen Reaktorrohren.

Diese Reaktoren sind vollständig, das heißt mit 20 l Katalysator der nachfolgend angegebenen Eigenschaften bzw. Kennziffern befüllt:

| Formkörper: | Extrudat mit Kreisprofil |
|---|---|
| Abmessungen: | 2,5 mm $\varnothing$, ca. 10 mm Länge |
| Schüttdichte: | 0,50 kg/l |
| $SiO_2$-Gehalt: | 17,0 Ma.-% |
| $Al_2O_3$-Gehalt | 73,5 Ma.-% |
| $MnO_2$Gehalt: | 3,0 Ma.-% |
| CaO-Gehalt: | 6,5 Ma.-% |

Das Abwasser durchströmt die zur Aufrechterhaltung des Temperaturniveaus von 50 °C gut isolierten Reaktorrohre unter Flutungsbedingungen. In den der Reaktorkaskade nachgeschalteten Auffangbehälter strömen stündlich 249,5 l Prozeßabwasser mit einem Restgehalt an organischen Peroxiden von <0,1 g/l (Nachweisgrenze) und 75 l/h Abgas ein, in dem folgende Komponenten nachgewiesen wurden:

| $O_2$: | 91 Vol.-% |
|---|---|
| $H_2$: | 7 Vol.-%. |

In diesen Behälter werden aus Sicherheitsgründen (Absenkung des $H_2$-Gehaltes unter die Explosionsgrenze) außerdem stündlich 200 l Außenluft am Abgasausgang eingeblasen.

Das am Fuß des Auffangbehälters abfließende nahezu peroxidfreie Abwasser mit einem gegenüber dem eingesetzten Prozeßabwasser um 30 % verringerten CSB-Wert wird einem herkömmlichen biologischen Abwasserreinigungsverfahren zugeführt. Der Nachweis zur biologischen Abbaubarkeit liegt vor. Die am Kopf des Auffangbehälters abströmende, mit $O_2$, aus dem Abgas angereicherte und unterhalb der Explosionsgrenze liegende Anteile $H_2$ enthaltende Luft wird in einem technischen Verbrennungsprozeß verwertet.

Beispiele 2 bis 7

- Benutzung der gleichen technischen Einrichtung wie im Beispiel 1 unter den in nachfolgender Tabelle angegebenen Bedingungen.

- Mengen an behandeltem Abwasser und an Abgas in allen Beispielen annähernd proportional den Mengen im Beispiel 1.

| Beispiel Nr. | Katalysator | Konz. organ. Peroxide (als MHP), g/l | Durchsatz Wasser l/h | $p_H$-Wert | Temperatur °C | Abgaszusammensetzung, Hauptbestandteile, Vol.-% | CSB-Absenkung % |
|---|---|---|---|---|---|---|---|
| 1 | 3,0 % $MnO_2$, Träger 73,5 Ma.-% $Al_2O_3$, 17,0 Ma.-% $SiO_2$, 6,5 Ma.-% CaO | 10 | 250 | 8,5 | 50 | $O_2$: 92 $H_2$: 7,0 | 30 |
| 2 | wie in Beispiel 1 | 10 | 250 | 10,0 | 50 | $O_2$: 83,7 $H_2$: 16,3 | 30 |
| 3 | wie in Beispiel 1 | 10 | 250 | 8,5 | 70 | $O_2$: 53,6 $H_2$: 44,0 | 35 |
| 4 | wie in Beispiel 1 | 20 | 100 | 8,0 | 50 | wie in Beispiel 1 | 25 |
| 5 | wie in Beispiel 1 | 40 | 50 | 8,5 | 50 | wie in Beispiel 1 | 30 |
| 6 | 3,0 Ma.-% $Fe_2O_3$, Träger wie in Beispiel 1 | 10 | 250 | 8,5 | 80 | $O_2$: 26,8 $H_2$: 52,4 | 35 |
| 7 | 2,3 Ma.-% $MnO_2$, 3,5 Ma.-% $Fe_2O_3$, 12,5 Ma.-% $SiO_2$, 81,7 Ma.-% $Al_2O_3$ | 10 | 250 | 8,5 | 70 | $O_2$: 58,3 $H_2$: 18,5 | 30 |

**Patentansprüche**

1. Verfahren zur Reinigung peroxidhaltiger Wässer mit einem Gehalt von 0,1 bis 40 g/l organisches Peroxid, dadurch gekennzeichnet, daß die Wässer bei Temperaturen von 40° bis 80 °C und - ggfs. durch Zugabe von Alkalilauge - einem $p_H$-Wert von 8 bis 10 mit Oxiden oder Oxidgemischen von Elementen der VII. und/oder VIII. Nebengruppe des Periodensystems in Kontakt gebracht werden.

2. Verfahren nach Anspruch 1, dadurch gekennzeichnet, daß die Behandlung der Wässer bei Temperaturen um 50 °C und $p_H$-Werten um 8,5 vorgenommen wird.

3. Verfahren zur Reinigung peroxidhaltiger Wässer nach Anspruch 1 oder 2, dadurch gekennzeichnet, daß Oxide oder Oxidgemische von Mangan und/oder Eisen eingesetzt werden.

4. Verfahren nach einem oder mehreren der Ansprüche 1 bis 3, dadurch gekennzeichnet, daß die Oxide oder Oxidgemische der Elemente der Nebengruppen auf inerten Trägermaterialien fixiert sind.

5. Verfahren nach einem oder mehreren der Ansprüche 1 bis 4, dadurch gekennzeichnet, daß die bei dem Verfahren entstehenden Gase zur kalorischen Verwertung genutzt werden.